# EUROPÄISCHE PATENTSCHRIFT

(11) **EP 3 499 172 B1**
(45) Veröffentlichungstag und Bekanntmachung des Hinweises auf die Patenterteilung: **14.07.2021**
(21) Anmeldenummer: 17206724.1
(22) Anmeldetag: 12.12.2017
(51) Int. Cl.: F28F 19/00, F16L 9/17, F28F 21/08, F27D 17/00, F28D 21/00, F22G 7/00

(54) **ÜBERHITZER ENTHALTEND EINE VERBRENNUNGSGASEN AUSGESETZTE ROHRANORDNUNG ENTHALTEND LÄNGSTNAHTGESCHWEISSTE ROHRE FÜR DAMPFERZEUGER MIT KORROSIVEN RAUCHGASEN**
SUPERHEATER COMPRISING A PIPE ASSEMBLY EXPOSED TO COMBUSTION GASES CONTAINING LONG SEAM WELDED TUBES FOR STEAM GENERATOR WITH CORROSIVE GASES
SURCHAUFFEUR COMPORTANT UN AGENCEMENT DE TUBES SOUMIS AUX GAZ DE COMBUSTION COMPORTANT DES TUBES SOUDÉS LONGITUDINALEMENT POUR GÉNÉRATEUR DE VAPEUR AUX GAZ DE FUMÉE CORROSIFS

(43) Veröffentlichungstag der Anmeldung: 19.06.2019
(73) Patentinhaber: Steinmüller Engineering GmbH, 51643 Gummersbach (DE)
(72) Erfinder: Schadow, Uwe, 51643 Gummersbach (DE); Streib, Rolf, 46395 Bocholt (DE)
(74) Vertreter: Godemeyer Blum Lenze Patentanwälte Partnerschaft mbB - werkpatent

(56) Entgegenhaltungen:
- EP-A1- 2 698 215
- WO-A1-2004/051174
- WO-A1-2013/171547
- WO-A2-2013/114070
- CN-A- 106 051 740

## Beschreibung

Die Erfindung betrifft Überhitzer enthaltend eine Verbrennungsgasen ausgesetzte Rohranordnung enthaltend längsnahtgeschweißte Rohre für Dampferzeuger mit korrosiven Rauchgasen und Dampferzeuger enthaltend diese Überhitzer, wobei die längsnahtgeschweißten aus einer Nickelbasislegierung oder einem Sonderedelstahl gefertigt sind. Die längsnahtgeschweißten Rohre aus der Nickelbasislegierungen oder Sonderedelstählen sind für die Verwendung als Überhitzerrohre in Dampferzeugern geeignet, und erfüllen die Anforderungen hinsichtlich hoher Korrosionsbeständigkeit, guter Warmbearbeitbarkeit, guter Zugfestigkeit und Strukturstabilität. Die aus diesen Metallen gefertigten Überhitzerrohre benötigen keine äußere Beschichtung oder Auftragschweißbeschichtung mehr, da sie ausreichend korrosionsbeständig sind.

WO 2013/114070 offenbart einen Überhitzer gemäß dem Oberbegriff des Anspruchs 1.

Die Verbrennung und thermische Behandlung von kommunalen und medizinischen Abfällen, von Klärschlamm und von Biomasse ist ein effektiver Weg zur Lösung der Abfallprobleme und leistet einen wichtigen Beitrag zur Energieerzeugung.

Allerdings beinhalten die Abfallströme eine Vielzahl von brennbaren Stoffen wie Paper, Kunststoffe, Holz, Biomasse und Industrieabfälle. Sie können reich an Chlor, Fluor und Schwefel sein und andere möglicherweise gefährliche chemische Verbindungen enthalten, welche bei der Verbrennung korrosive Gase, geschmolzene Salze und Asche bilden. In Dampferzeugern, die mit korrosiven Rauchgasen beaufschlagt werden, wie sie beispielsweise bei der Verbrennung von Hausmüll, Industrieabfällen, Biomasse aber auch von Klärschlamm entstehen, bilden sich Anbackungen und Ablagerungen an den Heizflächen. Diese schaffen häufig lokale Korrosionssysteme, die einen sehr schnellen Korrosionsangriff verursachen können, wobei die Hochtemperatur-Chlor-Korrosion und Salzschmelzkorrosion die wichtigsten sind.

Derzeit werden Kohlenstoffstähle und niedriglegierte (ferritische) Materialien zur Herstellung der nahtlosgefertigten Überhitzerrohre verwendet, wie z.B. 16Mo3 oder 13CrMo4-5, die mit einer Umhüllung bzw. Beschichtung aus einem hochlegierten Spezialstahl versehen werden, um das eigentliche Rohr zu schützen und Korrosionsprobleme in solchen Verbrennungsanlagen zu verringern. Hierbei wird z.B. durch Auftragschweißen eine 1 bis 2 mm starke Schicht aus einem Material, wie z.B. einer Nickelbasislegierung oder einem Werkstoff, der mit erheblichen Mengen an Chrom und Molybdän legiert ist, auf das zu schützende Rohr aufgebracht. Als Material für das Auftragschweißen werden derzeitig u.a. folgende Werkstoffe verwendet: Legierung 622 (Ni-22Cr-13Mo-W), Legierung 625 (Ni-22Cr-9Mo-3.5Nb) und Legierung 686 (Ni-21 Cr-16Mo-4W).

Die so beschichteten Rohre weisen jedoch den Nachteil auf, dass diese eine raue Oberfläche aufweisen und Schlacke auf dieser Beschichtung haften bleibt. Diese Ablagerungen sind nachteilig für die Wärmeübertragung, und können aufgrund ihres Gewichts die Rohre beschädigen. Zur Vermeidung dieser Nachteile müssen die Ablagerungen entfernt werden, wodurch Ausfallzeiten für Reparaturen und Wartung entstehen. Außerdem ist das aufgeschweißte aufgrund seiner inhomogenen Gefügestruktur korrosionsanfälliger als das verwendete homgenere Ausgangsmaterial für die Rohrfertigung.

Aufgabe der vorliegenden Erfindung war es daher, Ablagerungen und Anbackungen auf den Überhitzerrohren von Dampferzeugern zur verringern oder zu vermeiden, und die Wartungsintervalle zu verlängern und die Korrosionsbeständigkeit zu verbessern.

Die technische Aufgabe wird gelöst durch einen Überhitzer enthaltend eine Verbrennungsgasen ausgesetzte Rohranordnung enthaltend längsnahtgeschweißte Rohre, wobei die Verbrennungsgase insbesondere aus der Verbrennung von Brennstoffen ausgewählt aus der Gruppe bestehend aus Hausmüll, Industrieabfällen, Biomasse und Klärschlamm stammen, wobei die längsnahtgeschweißten Rohre aus lediglich einer einzigen Schicht einer Nickelbasislegierung oder eines Sonderedelstahls gefertigt sind.

Somit weist der erfindungsgemäße Überhitzer längsnahtgeschweißte Rohre auf, die als Überhitzerrohre in Dampferzeugern als einschichtige Rohre bzw. Einzelschichtrohre ausgebildet sind. Dies bedeutet, dass die Nickelbasislegierung oder der Sonderedelstahl, aus dem die längsnahtgeschweißten Rohre gefertigt sind, direkt den Verbrennungsgasen ausgesetzt sind.

In einer bevorzugten Ausführungsform des Überhitzers ist das längsnahtgeschweißte Rohr hergestellt unter Verwendung der Schritte:
i) Formen eines Rohlings bzw. Halbzeuges aus einer Nickelbasislegierung oder einem Sonderedelstahl zu einem flachen Walzband (Coil);
ii) Biegen des Walzbandes zu einem Rohr; und
iii) Verschweißen der sich gegenüberstehenden Kanten des gebogenen Walzbandes oder Bandbleches ohne Schweißzusatzwerkstoffe, wobei ein längsnahtgeschweißtes Rohr ausgebildet wird.

Somit weist in einer weiteren bevorzugten Ausführungsform des Überhitzers das längsnahtgeschweißte Rohr eine Längsnaht auf, die ohne Schweißzusatzwerkstoffe geschweißt ist bzw. wurde oder mit Schweißmaterial geschweißt wurde, das aus der gleichen Nickelbasislegierung oder dem gleichen Sonderedelstahl besteht wie das Material des zu schweißenden Rohrs. Dabei wird bei der Fertigung ein Schweißfaktor von 1,0 erzielt.

Die in dieser Erfindung verwendeten Legierungen weisen eine hervorragende Korrosionsbeständigkeit in verschiedenen hochkorrosiven Umgebungen auf. Da die Legierung zudem eine gute Warmbearbeitbarkeit, eine gute Zugfestigkeit und eine gute Strukturstabilität aufweist, sind die aus dieser Legierung gefertigten längsnahtgeschweißten Rohre sehr gut als Konstruktionsmaterial für Überhitzerrohre geeignet. Überraschenderweise haben die Erfinder gefunden, dass die längsnahtgeschweißten Rohre aus der hier verwendeten Legierung - anstelle von nahtlosen Rohren - als Überhitzerrohre in Dampferzeugern eingesetzt werden können und dabei alle technischen Anforderungen, die an Überhitzerrohre gestellt werden, sehr gut erfüllen.

Das Material der Nickelbasislegierungen oder der Sonderedelstähle stellt in dem erfindungsgemäßen Einzelschichtrohr die Innenseite und die Außenseite des Überhitzerrohrs dar. Somit weist das Überhitzerrohr keine äußere Beschichtung oder Auftragschweißbeschichtung auf. Das Material der Nickelbasislegierung oder Sonderedelstähle ist daher direkt den korrosiven Verbrennungsgasen ausgesetzt, diesen gegenüber beständig und verringert die Wahrscheinlichkeit von Ablagerungen und Anbackungen, so dass die Wartungsintervalle für deren Entfernung wesentlich länger sind oder gar keine Wartungen hierfür mehr vorgenommen werden müssen.

Neben der Korrosionsbeständigkeit weisen diese erfindungsgemäß eingesetzten Nickelbasislegierungen oder Sonderedelstähle auch höhere Festigkeitswerte bei gleicher Materialtemperatur auf, so dass die benötigten Wandstärken für die längsnahtgeschweißten Rohre vorteilhafterweise geringer bemessen sein können als bei den derzeit eingesetzten Kohlenstoffstählen. So weist in einer bevorzugten Ausführungsform das längsnahtgeschweißte Rohr eine Wandstärke von 2,0 bis 3,5 mm auf, vorzugsweise von 2,0 bis 3,0 mm.

In einer weiteren besonders bevorzugten Ausführungsform weist das längsnahtgeschweißte Rohr einen Durchmesser von 20,0 mm bis 80,0 mm auf.

Weiterhin ist bevorzugt, dass die Nickelbasislegierung der der Sonderedelstahl in Gewichts-% folgende Zusammensetzung aufweist:
mindestens 18,0 % Cr, vorzugsweise 20,0 % bis 32,0 % Cr,
6,0 bis 20,0 % Mo,
0,5 % bis 40,0 % Fe,
und den Rest Ni, vorzugsweise 25,0 bis 65,0 % Ni,
wobei Bestandteile von insgesamt kleiner 10,0 Gew.-% an AI, Nb, W, Mn, Si, Ti, Co, Cu, C, N und Spurenelemente enthalten sein können.

In einer weiteren besonders bevorzugten Ausführungsform weist die Nickelbasislegierung oder der Sonderedelstahl in Gewichts-% auf:
20,0 bis 28,0 % Cr,
6,0 bis 12,0 % Mo,
3,0 % bis 35,0 % Fe,
und den Rest Ni, vorzugsweise 30,0 bis 70 % Ni,
wobei Bestandteile von insgesamt kleiner 10,0 Gew.-% an Al, Nb, W, Mn, Si, Ti, Co, Cu, C, N und Spurenelemente enthalten sein können.

Besonders bevorzugt weist die Nickelbasislegierung oder der Sonderedelstahl in Gewichts-% auf:
20,0 bis 28,0 % Cr,
6,0 bis 12,0 % Mo,
3,0 % bis 35,0 % Fe,
1,5 bis 4,5 % Nb,
nicht mehr als 0,4 % Al,
und den Rest Ni, vorzugsweise 30,0 bis 70 % Ni,
wobei Bestandteile von insgesamt kleiner 10,0 Gew.-% an W, Mn, Si, Ti, Co, Cu, C, N und Spurenelemente enthalten sein können.

In einer weiteren ganz besonders bevorzugten Ausführungsform ist die Nickelbasislegierung oder der Sonderedelstahl im Wesentlichen in Gewichts-% zusammengesetzt aus:
nicht mehr als 0,1 % C,
20,0 bis 28,0 % Cr,
6,0 bis 12,0 % Mo,
nicht mehr als 4,5 % Nb,
nicht mehr als 0,4 % Al,
nicht mehr als 1,0 % Co,
nicht mehr als 1,5 % Cu,
3,0 % bis 35,0 Fe,
nicht mehr als 0,5 % Si,
nicht mehr als 0,4 % Ti,
nicht mehr als 4,0 % Mn,
optional nicht mehr als 0,01 % B,
optional nicht mehr als 0,05 % P,
optional nicht mehr als 0,01 % S,
optional nicht mehr als 0,01 % Mg,
optional nicht mehr als 0,01 % Ca,
optional nicht mehr als 0,02 % O,
optional nicht mehr als 0,3 % N,
optional nicht mehr als 0,1 % Seltene-Erdelemente, und
den Rest Ni und unvermeidbaren Verunreinigungen.

Weiterhin ist einer bevorzugten Ausführungsform die Nickelbasislegierung oder der Sonderedelstahl im Wesentlichen in Gewichts-% zusammengesetzt aus (Alloy 625; 2.4856)
nicht mehr als 0,1 % C,
20,0 bis 28,0 % Cr,
8,0 bis 12,0 % Mo,
1,5 bis 4,5 % Nb,
nicht mehr als 0,4 % Al,
nicht mehr als 1,0 % Co,
nicht mehr als 10,0 % Fe, vorzugsweise nicht mehr als 5,0 % Fe,
nicht mehr als 0,5 % Si,
nicht mehr als 0,4 % Ti,
nicht mehr als 0,5 % Mn,
optional nicht mehr als 0,01 % B,
optional nicht mehr als 0,05 % P,
optional nicht mehr als 0,01 % S,
optional nicht mehr als 0,01 % Mg,
optional nicht mehr als 0,01 % Ca,
optional nicht mehr als 0,02 % O,
optional nicht mehr als 0,1 % Seltene-Erdelemente, und
den Rest Ni und unvermeidbaren Verunreinigungen.

In einer alternativen bevorzugten Ausführungsform ist die Nickelbasislegierung oder der Sonderedelstahl im Wesentlichen in Gewichts-% zusammengesetzt aus (Alloy 31 plus; 2.4692)
nicht mehr als 0,1 % C,
20,0 bis 28,0 % Cr,
6,0 bis 12,0 % Mo,
nicht mehr als 0,4 % Al,
nicht mehr als 1,5 % Cu,
24,0 % bis 35,0 % Fe,
nicht mehr als 0,5 % Si,
nicht mehr als 4,0 % Mn,
optional nicht mehr als 0,01 % B,
optional nicht mehr als 0,05 % P,
optional nicht mehr als 0,01 % S,
optional nicht mehr als 0,01 % Mg,
optional nicht mehr als 0,01 % Ca,
optional nicht mehr als 0,02 % O,
optional nicht mehr als 0,3 % N,
optional nicht mehr als 0,1 % Seltene-Erdelemente, und
den Rest Ni und unvermeidbaren Verunreinigungen.

Die Auswirkungen der Legierungsbestandteile und die Gründe für die Festlegung der Gehalte der einzelnen Elemente hinsichtlich der für die Erfindung notwendigen Eigenschaften des Rohrs bzw. Überhitzerrohrs sind wie folgt:

### C (Kohlenstoff):

Wenn der C-Gehalt zu hoch ist, verbindet er sich mit Cr, wobei Chromcarbid gebildet wird. Dadurch wird die Legierung korrosionsempfindlich. Daher ist der Gehalt an C vorzugsweise auf bis 0,1 Gew.-%, weiter bevorzugt auf bis 0,05 Gew.-% beschränkt. Weiter bevorzugt ist es, den C-Gehalt zu minimieren bis zu einer Menge, die im industriellen Raffinationsverfahren wirtschaftlich erreichbar ist.

### Si (Silizium):

Si ist als Desoxidationsmittel wirksam. Ein Si-Gehalt von mehr als 0,5 Gew.-% bewirkt, dass die Legierung bei hohen Temperaturen spröde wird. Daher ist der Si-Gehalt vorzugsweise auf bis 0,5 Gew.-% beschränkt.

### Mn (Mangan):

Mn wirkt als Desoxidationsmittel. Allerdings reduziert ein Mn-Gehalt von mehr als 0,5 Gew.-% die Warmbearbeitbarkeit der Legierung. Daher ist der Mn-Gehalt vorzugsweise auf bis zu 4,0 Gew.-%, weiter bevorzugt auf bis zu 2,0 Gew.-% und noch weiter bevorzugt auf bis zu 0,5 Gew.-% beschränkt.

### Cr (Chrom):

Cr ist eines der wesentlichen Elemente zur Verbesserung der Korrosions- und Oxidationsbeständigkeit der Legierung. Dieser Effekt ist ab einem Cr-Gehalt von 20,0 Gew.-% signifikant und daher ist dieser Mindestgehalt bevorzugt. Bei hohen Cr-Gehalten wird jedoch die plastische Umformbarkeit der Legierung beeinträchtigt. Daher beträgt der Cr-Gehalt bevorzugt mindestens 20,0 Gew.-% und weiter bevorzugt 20,0 bis 28,0 Gew.-%.

### Mo (Molybdän):

Mo verbessert die Beständigkeit gegen Lochfraßkorrosion und Kontaktkorrosion in Chlorionen-haltigen Umgebungen und die Widerstandsfähigkeit gegenüber verschiedenen Säurelösungen und Chlorid-haltigen Salzschmelzen. Diese Wirkungen von Mo treten insbesondere bei Gehalten von 6,0 bis 12,0 Gew.-% auf, so dass bevorzugte Mo-Gehalte von 6,0 bis 12,0 Gew.-% liegen.

### Al (Aluminium):

AI wirkt als ein Desoxidationsmittel des Stahls. AI muss nicht notwendigerweise in der Legierung vorhanden sein. Vorzugsweise ist in der Legierung mehr als 0,1 Gew.-% AI für die ausreichende desoxidierende Wirkung enthalten. Wenn der Al-Gehalt mehr als 0,4 Gew-% beträgt, kann die Kriechfestigkeit und die Zähigkeit verringert sein. Daher ist der Al-Inhalt vorzugsweise auf bis zu 0,4 Gew.-% beschränkt.

### Fe (Eisen):

Fe verbessert die Warmbearbeitbarkeit und verhindert die Hochtemperaturversprödung. Der enthält die Legierung vorzugsweise 3,0 bis 35,0 Gew.-% Fe. Daher wurde in einer bevorzugten Ausführungsform der Gehalt an Fe auf 24,0 Gew.-% bis 35,0 Gew.-% bestimmt.

Andererseits beeinträchtigt ein hoher Fe-Gehalt die gute Korrosionsbeständigkeit der Legierung, da der höhere Fe-Gehalt mit einem niedrigeren Gehalt an Ni einhergeht. Daher wurde in einer alternativen bevorzugten Ausführungsform die Obergrenze des Fe-Gehalts auf 10,0 Gew.-%, weiter bevorzugt auf bis 5,0 Gew.-% bestimmt.

Im Falle von Nb-haltigen Nickelbasislegierungen verhindert Fe die Hochtemperaturversprödung dieser Legierung, wenn Produkte aus dieser Legierung über einen langen Zeitraum erhöhten Temperaturen ausgesetzt ist. In einer Ausführungsform der in dieser Erfindung verwendeten Legierung kann der Nb-Gehalt vorzugsweise bis zu 4,5 Gew.-% betragen, um die Korrosionsbeständigkeit zu verbessern. Durch Zugabe von Fe kann die durch den hohen Nb-Gehalt bedingte Verringerung der Warmbearbeitbarkeit und die Beständigkeit gegenüber der Hochtemperaturversprödung erreicht werden.

### Nb (Niob):

Nb hat eine Wirkung C aufgrund der Bildung von Carbid zu fixieren, um die Ausfällung von Chromkarbid zu verhindern und dadurch die Beständigkeit gegen interkristalline Korrosion der Legierung zu verbessern. Auf der anderen Seite verringert Nb die Bearbeitbarkeit und Strukturstabilität der Legierung.

Legierungen, die mehr als 0,5 Gew.-% Nb enthalten weisen eine deutlich verbesserte Korrosionsbeständigkeit auf. Daher beträgt der Nb-Gehalt in einer Ausführungsform vorzugsweise bis 4,5 Gew.-%, weiter bevorzugt 1,5 Gew.-% bis 4,5 Gew.-%. Nb enthält Ta, das von Nb wegen der technischen Schwierigkeit der Raffination nicht vollständig von Nb getrennt werden kann. Daher bedeutet Nb "Nb + Ta" in dieser Anmeldung.

Auf der anderen Seite verschlechtern höhere Mengen an Nb die Warm- und Kaltbearbeitbarkeit der Legierung und machen diese gegenüber der Hochtemperaturversprödung empfindlich. Eine solche nachteilige Wirkung von Nb kann durch Fe gemildert werden. Daher ist in einer alternativen bevorzugten Ausführungsform kein Nb in der Legierung enthalten, oder nur als unvermeidbare Verunreinigung.

### P (Phosphor):

P ist eine unvermeidbare Verunreinigung, die aus den zur Herstellung verwendeten Rohstoffen stammt und die Bearbeitbarkeit der Legierung beeinträchtigt. Die Warmbearbeitbarkeit der Legierung wird signifikant verbessert, wenn der P-Gehalt vorzugsweise nicht mehr als 0,05 Gew.-%, weiter bevorzugt nicht mehr als 0,01 Gew.-% beträgt.

### Ca (Calcium) und Mg (Magnesium):

Obwohl diese Elemente für die hier verwendete Legierung nicht notwendig sind, können sie zugegeben werden, wenn eine besonders gute Warmbearbeitbarkeit der Legierung erforderlich ist. Allerdings bilden mehr als 0,01% Ca oder Mg intermetallische Verbindungen mit niedrigem Schmelzpunkt, die die Warmbearbeitbarkeit verschlechtern. Wenn Ca und/oder Mg zugegeben wird, um die Warmbearbeitbarkeit zu verbessern, ist es bevorzugt, dass der Gehalt an jeder oder insgesamt nicht weniger als 0,003% beträgt.

### Seltene-Erdelemente:

Obwohl Seltene-Erdelemente wie Y, La und Ce entbehrliche Elemente sind, können sie gegebenenfalls hinzugefügt werden, um die Warmbearbeitbarkeit zu verbessern. Wenn jedoch der Gehalt mehr als 0,1 Gew.-% beträgt, nimmt die Warmverarbeitbarkeit aufgrund der Bildung von intermetallischen Verbindungen mit Ni, Cr, Mo usw. ab.

### B (Bor):

B verbessert die Beständigkeit gegen die Hochtemperatur-Kriechverformung. Der bevorzugte Bereich des Gehalts an B beträgt bis 0,01 Gew.-%. Höhere B-Gehalte sind nachteilig, da B Verbindungen mit niedrigem Schmelzpunkt, wie NiB, bildet, die die Warmbearbeitbarkeit der Legierung verringern.

### Ti

Ti ist in der Nickelbasislegierung vorzugsweise bis zu einem Gehalt von 0,4 Gew.-% enthalten. Ti wird verwendet, um N als TiN-Präzipitate zu fixieren, da N Cr2N bildet, das die Korrosionsbeständigkeit der Legierung verringert.

Die Erfindung stellt weiterhin einen Dampferzeuger bereit enthaltend einen Überhitzer mit einer Verbrennungsgasen ausgesetzten Rohranordnung enthaltend die oben beschriebenen längsnahtgeschweißten Rohre.

Weiterhin betrifft die Erfindung die Verwendung des erfindungsgemäßen Überhitzers in einem Dampferzeuger oder die Verwendung des erfindungsgemäßen Dampferzeugers zur Erzeugung von überhitztem Dampf, wobei die längsnahtgeschweißten Rohre den Verbrennungsgasen ausgesetzt sind. Das ausgesetzt sein bedeutet, dass die Verbrennungsgase an den längsnahtgeschweißten Rohren vorbeiströmen und die Wärme an diese abgeben. Dabei nimmt das in den Rohren strömende Wärmetauscherfluid die Wärme auf und transportiert sie zur weiteren Nutzung ab.

In einer bevorzugten Verwendung stammen die Verbrennungsgase aus der Verbrennung von Brennstoffen ausgewählt aus der Gruppe bestehend aus Hausmüll, Industrieabfällen, Biomasse und Klärschlamm. Aufgrund dieser Brennstoffe sind die betreffenden Verbrennungsgase reich an Halogenverbindungen, insbesondere reich an Chlorverbindungen, und/oder an Schwefelverbindungen.

Zum Vergleich: Bei der Verbrennung von fossilen Brennstoffen, wie etwa Steinkohle und Braunkohle, liegen die SO₂-Werte im Rauchgas in der Regel bei 1.000-10.000 mg/Nm³ SO₂. ("Nm³": Normkubikmeter). Die Werte für HCl liegen bei 5 bis 100 mg/Nm³ HCl. Fluor und Brom usw. sind in der Regel nur in Spuren vorhanden.

Bei der Verbrennung von Hausmüll, Industrieabfällen, Biomasse, und Klärschlamm sind die Werte deutlich höher. Die SO₂-Konzentration liegt in der Regel zwischen 500 und 8.000 mg/Nm³. Die Konzentrationen an Halogen-Verbindungen in den Verbrennungsgasen liegen hier in einem Bereich von 300 und 8.000 mg/Nm³. Dabei können Brom und Fluor in deutlich höheren Konzentrationen auftreten.

Daher sind die Materialien, die den aus der Verbrennung von Brennstoffen wie Hausmüll, Industrieabfällen, Biomasse und Klärschlamm stammenden Verbrennungsgasen ausgesetzt sind, deutlich mehr gefordert und unterliegen einer weitaus höheren Korrosion als in der Kohleverbrennung.

Daher weisen in einer bevorzugten Verwendung die Verbrennungsgase eine Halogen-Konzentration von mindestens 200 mg/Nm³, vorzugsweise von mindestens 500 mg/Nm³ auf.

Weiterhin ist bevorzugt, dass die Verbrennungsgase eine Temperatur von 700°C bis 1000°C aufweisen, d.h. die Verbrennungsgase treffen mit diesen Temperaturen auf die Überhitzerrohre bzw. längsnahtgeschweißten Rohre.

Zudem ist weiterhin bevorzugt, dass die Verbrennungsgase einen Feuchtegehalt von mindestens 15 %, vorzugsweise von mindestens 20 % und weiter bevorzugt von mindestens 25 % aufweisen.

Die oben beschriebenen längsnahtgeschweißten Rohre, die diesen aggressiven Verbrennungsgasen ausgesetzt sind, sind in besonderer Weise geeignet, die durch diese Verbrennungsgase gestellten Anforderungen zu genügen. Wie oben bereits erläutert, sind die längsnahtgeschweißten Rohre lediglich aus einer einzigen Schicht einer Nickelbasislegierung oder aus einer einzigen Schicht eines Sonderedelstahls gefertigt. Somit sind die längsnahtgeschweißten Rohre als einschichtige Rohre bzw. als Einzelschichtrohre ausgebildet. Diese einzelne Schicht besteht aus der genannten Nickelbasislegierung oder dem genannten Sonderedelstahl. Daraus ergibt sich, dass die längsnahtgeschweißten Rohre auch keine Auftragschweißbeschichtung aufweisen. Dies bedeutet, dass die Nickelbasislegierung oder der Sonderedelstahl, aus dem die (einzige Schicht der) längsnahtgeschweißten Rohre gefertigt sind, direkt den Verbrennungsgasen ausgesetzt sind.

Die Erfindung stellt weiterhin ein Verfahren bereit zur Erzeugung von überhitztem Dampf in Dampferzeugern enthaltend Überhitzer mit längsnahtgeschweißten Rohren, wobei die längsnahtgeschweißten Rohre den Verbrennungsgasen ausgesetzt sind.

In einem bevorzugten Verfahren stammen die Verbrennungsgase aus der Verbrennung von Brennstoffen ausgewählt aus der Gruppe bestehend aus Hausmüll, Industrieabfällen, Biomasse und Klärschlamm. Wie oben erläutert, sind die Verbrennungsgase reich an Halogenverbindungen, insbesondere an Chlorverbindungen. Weiterhin können die Verbrennungsgase reich an Schwefelverbindungen sein.

So weisen in einem bevorzugten Verfahren die Verbrennungsgase eine Halogen-Konzentration von mindestens 200 mg/Nm³, vorzugsweise von mindestens 500 mg/Nm³ auf.

Weiterhin ist bevorzugt, dass die Verbrennungsgase eine Temperatur von 700°C bis 1000°C aufweisen, d.h. die Überhitzerrohre bzw. längsnahtgeschweißten Rohre sind Verbrennungsgasen mit einer Temperatur im Bereich von 700°C bis 1000°C ausgesetzt.

In einem weiteren bevorzugten Verfahren weisen die Verbrennungsgase einen Feuchtegehalt von mindestens 15 %, vorzugsweise von mindestens 20 % und weiter bevorzugt von mindestens 25 % auf.

Weiterhin ist bevorzugt, dass der durch die längsnahtgeschweißten Rohre bzw. Überhitzerrohre strömende überhitzte Dampf einen Druck von mindestens 40,0 bar aufweist. Insbesondere ist bevorzugt, dass der durch die längsnahtgeschweißten Rohre bzw. Überhitzerrohre strömende überhitzte Dampf eine Temperatur von 300°C bis 600 °C, vorzugsweise von 300 °C bis 450 °C aufweist.

Die Erfindung betrifft auch ein Verfahren zur Herstellung eines Rohrs als Überhitzerrohr eines Dampferzeugers, hergestellt aus der oben genannten Nickelbasislegierung, umfassend die Schritte:
i) Formen eines Rohlings bzw. Halbzeuges aus einer Nickelbasislegierung oder einem Sonderedelstahl zu einem flachen Walzband (Coil);
ii) Biegen des Walzbandes zu einem Rohr; und
iii) Verschweißen der sich gegenüberstehenden Kanten des gebogenen Walzbandes oder Bandbleches ohne Schweißzusatzwerkstoffe, wobei ein längsnahtgeschweißtes Rohr ausgebildet wird.

Der Schritt i) umfasst vorzugsweise das Unterwerfen des Rohlings bzw. des Halbzeugs einer plastischen Bearbeitung von mindestens einer der Warmbearbeitung und Kaltbearbeitung, wobei ein Blech, d.h. ein Walzblech ausgeformt wird, das den Abmessungen des herzustellenden Rohrs entspricht.

Die Nickelbasislegierungen oder die Sonderedelstähle, die in der vorliegenden Erfindung verwendet werden, können in dem herkömmlichen industriellen Verfahren und den Apparaten hergestellt werden. Beispielsweise werden nach dem Schmelzen von Materialien wie Ni, Cr, Fe usw. in einem Lichtbogenofen oder einem Hochfrequenz-Induktionsofen eine Desoxidation und Einstellung der chemischen Zusammensetzung, Barren oder Brammen in dem Barrenbildungsprozess oder dem Stranggießverfahren hergestellt.

Die Erfindung wird in den folgenden Beispielen näher erläutert.

### Beispiele

Beispiele für geeignete Materialen zur Herstellung der längsnahtgeschweißten Rohre sind korrosionsbeständige Nickelbasis-Werkstoffe wie etwa 2.4856 (Legierung 625) oder 2.4692 (Legierung 31 Plus).

### Beispiel 1: Herstellung längsnahtgeschweißter Rohre

Legierungen mit den in Tabelle 1 und 2 gezeigten chemischen Zusammensetzungen wurden in einem Vakuumschmelzofen geschmolzen und in Barren gegossen. Nach dem Abziehen wurden die Barren bei einer Temperatur von 200 °C für 5 Stunden erhitzt und in einem Temperaturbereich zwischen 1.200°C und 1.050°C in zu einem flachen Walzband geschmiedet.

Das Walzband wurde weiter bis zu einer Stärke von 2,4 mm gewalzt, zu einem Rohr gebogen. Die sich gegenüberstehenden Kanten des gebogenen Blechs bzw. Walzbandes wurden ohne Schweißzusatzwerkstoffe mittels Lichtbogenschweißen unter Schutzgas-Atmosphäre gemäß den folgenden Normen verschweißt, wobei ein längsnahtgeschweißtes Rohr erzeugt wurde: EN ISO 15609-1:2005-01 (WPS) (Anforderung und Qualifizierung von Schweißverfahren für metallische Werkstoffe - Schweißanweisung - Teil 1: Lichtbogenschweißen [ISO 15609-1:2004]), EN ISO 15614-1:2017-12 (WPQR) (Anforderung und Qualifizierung von Schweißverfahren für metallische Werkstoffe - Schweißverfahrensprüfung - Teil 1: Lichtbogen- und Gasschweißen von Stählen und Lichtbogenschweißen von Nickel und Nickellegierungen [ISO 15614-1:2017]) und EN ISO 13920:1996:11 (Schweißen - Allgemeintoleranzen für Schweißkonstruktionen - Längen - und Winkelmaße; Form und Lage [ISO 13920:1996]).

Anschließend wurde die Schweißnaht geglättet. Die erhaltenen längsnahtverschweißten Rohre bestanden aus einer einzigen Schicht des Metallwerkstoffes und es wurden keinerlei Beschichtungen aufgebracht. In den Tabellen 1 und 2 werden die verwendeten Legierungen für das längsnahtverschweißte Rohr näher definiert.

**Tabelle 1:**

| | **Ni** | **Cr** | **Fe** | **C** | **Mn** | **Si** | **Co** | **Al** | **Ti** | **P** | **S** | **Mo** | **Nb** |
|---|---|---|---|---|---|---|---|---|---|---|---|---|---|
| min. | Rest | 21,0 | | | | | | | | | | 8,0 | 3,2 |
| max. | | 23,0 | 5,0 | 0,03 | 0,5 | 0,4 | 1,0 | 0,4 | 0,4 | 0,01 | 0,01 | 10,0 | 3,8 |

**Tabelle 2:**

| | **Ni** | **Cr** | **Fe** | **C** | **Mn** | **Si** | **Cu** | **Al** | **P** | **S** | **N** | **Mo** |
|---|---|---|---|---|---|---|---|---|---|---|---|---|
| min. | 33,5 | 26,0 | Rest | | 1,0 | | 0,5 | | | | 0,1 | 6,0 |
| max. | 35,0 | 27,0 | | 0,01 | 4,0 | 0,1 | 1,5 | 0,3 | 0,02 | 0,01 | 0,25 | 7,0 |

### Beispiel 2: Untersuchungen auf Korrosionsbeständigkeit

Die in Beispiel 1 gefertigten längsnahtgeschweißten Rohre wurden als Überhitzerrohre in einen Dampferzeuger einer Abfallverbrennungsanlage eingebaut und angeschlossen. Somit waren die längsnahtgeschweißten Rohre den Verbrennungsgasen ausgesetzt. Mehrere Messungen der Verbrennungsgase ergaben eine Halogen-Konzentration von 350 bis 850 mg/Nm³, einen Feuchtegehalt von 18% bis 28 % und eine Temperatur von 700°C bis 1000°C. Die Temperatur des Dampfes, der in den längsnahtgeschweißten Rohren strömte, betrug 400°C bis 440°C.

### Ergebnis

Nachdem die Rohre den Verbrennungsgasen fünf Monate ausgesetzt waren wurden diese auf Korrosion hin überprüft. Es wurde gefunden, dass die Rohre eine hervorragende Korrosionsbeständigkeit aufwiesen und keinerlei Probleme bzgl. der Schweißnaht auftraten.

Da die verwendeten Legierungen eine hohe Korrosionsbeständigkeit und zudem eine gute Warmbearbeitbarkeit, eine gute Zugfestigkeit und eine gute Strukturstabilität aufweisen, sind die aus den genannten Legierungen gefertigten längsnahtgeschweißten Rohre sehr gut als Konstruktionsmaterial für Überhitzerrohre geeignet. Weiterhin haben die Erfinder gefunden, dass längsnahtgeschweißte Rohre aus der hier verwendeten Legierung anstatt von nahtlosen Rohren als Überhitzerrohre in Dampferzeugern eingesetzt werden können und dabei alle Anforderungen sehr gut erfüllten.

## Patentansprüche

1. Ein Überhitzer enthaltend eine Verbrennungsgasen ausgesetzte Rohranordnung, wobei der Überhitzer so konstruiert ist, dass die Rohranordnung Rohre enthält, die Verbrennungsgasen ausgesetzt sind, wobei die Verbrennungsgase insbesondere aus der Verbrennung von Brennstoffen ausgewählt aus der Gruppe bestehend aus Hausmüll, Industrieabfällen, Biomasse und Klärschlamm stammen, **dadurch gekennzeichnet, dass** die Rohre längsnahtgeschweißt sind und aus lediglich einer einzigen Schicht einer Nickelbasislegierung oder eines Sonderedelstahls gefertigt sind.

2. Der Überhitzer gemäß Anspruch 1, **dadurch gekennzeichnet, dass** die längsnahtgeschweißten Rohre eine Wandstärke von 2,0 bis 3,5 mm, vorzugsweise von 2,0 bis 3,0 mm aufweisen.

3. Der Überhitzer gemäß Anspruch 1 oder 2, **dadurch gekennzeichnet, dass** die längsnahtgeschweißten Rohre einen Durchmesser von 20,0 mm bis 80,0 mm aufweisen.

4. Der Überhitzer gemäß irgendeinem der Ansprüche 1 bis 3, **dadurch gekennzeichnet, dass** die Nickelbasislegierung oder der Sonderedelstahl in Gewichts-% folgende Zusammensetzung aufweist:
mindestens 18,0 % Cr, vorzugsweise 20,0 % bis 32,0 % Cr,
6,0 bis 20,0 % Mo,
0,5 % bis 40,0 % Fe,
und den Rest Ni, vorzugsweise 25,0 bis 65,0 % Ni,
wobei Bestandteile von insgesamt kleiner 10,0 Gew.-% an Al, Nb, W, Mn, Si, Ti, Co, Cu, C, N und Spurenelemente enthalten sein können.

5. Dampferzeuger enthaltend einen oder mehrere Überhitzer mit einer Verbrennungsgasen ausgesetzten Rohranordnung, wobei die Rohranordnung längsnahtgeschweißte Rohre gemäß irgendeinem der Ansprüche 1 bis 4 aufweist.

6. Verwendung des Überhitzers gemäß irgendeinem der Ansprüche 1 bis 4 in einem Dampferzeuger oder Verwendung des Dampferzeugers gemäß Anspruch 5 zur Erzeugung von überhitztem Dampf, wobei die längsnahtgeschweißten Rohre den Verbrennungsgasen ausgesetzt sind.

7. Die Verwendung gemäß Anspruch 6, **dadurch gekennzeichnet, dass** die Verbrennungsgase aus der Verbrennung von Brennstoffen ausgewählt aus der Gruppe bestehend aus Hausmüll, Industrieabfällen, Biomasse und Klärschlamm stammen.

8. Die Verwendung gemäß Anspruch 6 oder 7, **dadurch gekennzeichnet, dass** die Verbrennungsgase eine Halogen-Konzentration von mindestens 200 mg/Nm³, vorzugsweise von mindestens 500 mg/Nm³ aufweisen.

9. Ein Verfahren zur Erzeugung von überhitztem Dampf in Dampferzeugern enthaltend Überhitzer mit längsnahtgeschweißten Rohren gemäß Anspruch 5, wobei die längsnahtgeschweißten Rohre den Verbrennungsgasen ausgesetzt sind.

10. Das Verfahren gemäß Anspruch 9, **dadurch gekennzeichnet, dass** die Verbrennungsgase aus der Verbrennung von Brennstoffen ausgewählt aus der Gruppe bestehend aus Hausmüll, Industrieabfällen, Biomasse und Klärschlamm stammen.

11. Das Verfahren gemäß Anspruch 9 oder 10, **dadurch gekennzeichnet, dass** die Verbrennungsgase eine Halogen-Konzentration von mindestens 200 mg/Nm³, vorzugsweise von mindestens 500 mg/Nm³ aufweisen.

12. Das Verfahren gemäß irgendeinem der Ansprüche 9 bis 11, **dadurch gekennzeichnet, dass** die Verbrennungsgase einen Feuchtegehalt von mindestens 15 %, vorzugsweise von mindestens 20 % und weiter bevorzugt von mindestens 25 % aufweisen.

13. Das Verfahren gemäß irgendeinem der Ansprüche 9 bis 12, **dadurch gekennzeichnet, dass** die Verbrennungsgase mit einer Temperatur von 700°C bis 1000°C auf die Überhitzerrohre bzw. auf die längsnahtgeschweißten Rohre treffen.

14. Die Verwendung gemäß irgendeinem der Ansprüche 6 bis 8 oder das Verfahren gemäß irgendeinem der Ansprüche 9 bis 13, **dadurch gekennzeichnet, dass** der in den längsnahtgeschweißten Rohren strömende überhitzte Dampf eine Temperatur von 300°C bis 600°C, vorzugsweise von 300°C bis 450°C aufweist.

15. Die Verwendung gemäß irgendeinem der Ansprüche 6 bis 8 oder das Verfahren gemäß irgendeinem der Ansprüche 9 bis 13, **dadurch gekennzeichnet, dass** der durch die längsnahtgeschweißten Rohre bzw. Überhitzerrohre strömende überhitzte Dampf einen Druck von mindestens 40,0 bar aufweist.

## Claims

1. A superheater comprising a tube arrangement exposed to combustion gases, wherein the superheater is designed so that the tube arrangement comprises tubes exposed to combustion gases, wherein the combustion gases originate in particular from the combustion of fuels selected from the group consisting of household waste, industrial waste, biomass and sewage sludge, **characterized in that** the tubes are longitudinally welded tubes and are made of only a single layer of a nickel-based alloy or a special stainless steel.

2. The superheater according to claim 1, **characterized in that** the longitudinally welded tubes have a wall thickness of 2.0 to 3.5 mm, preferably 2.0 to 3.0 mm.

3. The superheater according to claim 1 or 2, **characterized in that** the longitudinally welded tubes have a diameter of 20.0 mm to 80.0 mm.

4. The superheater according to any one of claims 1 to 3, **characterized in that** the nickel-based alloy or the special stainless steel has the following composition in % by weight:
at least 18.0% Cr, preferably 20.0% to 32.0% Cr,
6.0 to 20.0% Mo,
0.5 % to 40.0% Fe,
and the balance is Ni, preferably 25.0 to 65.0% Ni,
wherein it may contain components of less than 10.0% by weight of Al, Nb, W, Mn, Si, Ti, Co, Cu, C, N and trace elements.

5. Steam generator comprising one or more superheaters comprising a tube arrangement exposed to combustion gases, wherein the tube arrangement comprises longitudinally welded tubes according to any one of claims 1 to 4.

6. Use of the superheater according to any one of claims 1 to 4 in a steam generator or use of the steam generator according to claim 5 for generating superheated steam, wherein the longitudinally welded tubes are exposed to the combustion gases.

7. The use according to claim 6, **characterized in that** the combustion gases originate from the combustion of fuels selected from the group consisting of household waste, industrial waste, biomass and sewage sludge.

8. The use according to claim 6 or 7, **characterized in that** the combustion gases have a halogen concentration of at least 200 mg/Nm³ (standard cubic metres), preferably of at least 500 mg/Nm³ (standard cubic metres).

9. A method for generating superheated steam in steam generators comprising superheaters having longitudinally welded tubes according to claim 5, wherein the longitudinally welded tubes are exposed to the combustion gases.

10. The method according to claim 9, **characterized in that** the combustion gases originate from the combustion of fuels selected from the group consisting of household waste, industrial waste, biomass and sewage sludge.

11. The method according to claim 9 or 10, **characterized in that** the combustion gases have a halogen concentration of at least 200 mg/Nm³ (standard cubic metres), preferably of at least 500 mg/Nm³ (standard cubic metres).

12. The method according to any one of claims 9 to 11, **characterized in that** the combustion gases have a moisture content of at least 15%, preferably of at least 20% and more preferably of at least 25%.

13. The method according to any one of claims 9 to 12, **characterized in that** the combustion gases hit the superheater tubes or the longitudinally welded tubes at a temperature of 700 °C to 1000 °C.

14. The use according to any one of claims 6 to 8 or the method according to any one of claims 9 to 13, **characterized in that** the superheated steam flowing in the longitudinally welded tubes has a temperature of 300 °C to 600 °C, preferably of 300 °C to 450 °C.

15. The use according to any one of claims 6 to 8 or the method according to any one of claims 9 to 13, **characterized in that** the superheated steam flowing through the longitudinally welded tubes or superheater tubes has a pressure of at least 40.0 bar.

## Revendications

1. Surchauffeur contenant un agencement de tubes exposé à des gaz de combustion, dans lequel le surchauffeur est construit de sorte que l'agencement de tubes contienne des tubes qui sont exposés à des gaz de combustion, dans lequel les gaz de combustion proviennent en particulier de la combustion de combustibles sélectionnés à partir du groupe composé de déchets ménagers, déchets industriels, biomasse et boue de curage, **caractérisé en ce que** les tubes sont soudés longitudinalement et sont fabriqués juste à partir d'une seule couche d'un alliage à base de nickel ou d'un acier spécial.

2. Surchauffeur selon la revendication 1, **caractérisé en ce que** les tubes soudés longitudinalement présentent une épaisseur de paroi de 2,0 à 3,5 mm, de préférence de 2,0 à 3,0 mm.

3. Surchauffeur selon la revendication 1 ou 2, **caractérisé en ce que** les tubes soudés longitudinalement présentent un diamètre de 20,0 mm à 80,0 mm.

4. Surchauffeur selon l'une quelconque des revendications 1 à 3, **caractérisé en ce que** l'alliage à base de nickel ou l'acier spécial présente la composition suivante en % en poids :
au moins 18,0 % de Cr, de préférence 20,0 % à 32,0 % de Cr,
6,0 à 20,0 % de Mo,
0,5 % à 40,0 % de Fe,
et le reste de Ni, de préférence 25,0 à 65,0 % de Ni,
dans lequel des constituants dans l'ensemble inférieurs à 10,0 % en poids de Al, Nb, W, Mn, Si, Ti, Co, Cu, C, N et des oligoéléments peuvent être contenus.

5. Générateur de vapeur contenant un ou plusieurs surchauffeurs avec un agencement de tubes exposés à des gaz de combustion, dans lequel l'agencement de tubes présente des tubes soudés longitudinalement selon l'une quelconque des revendications 1 à 4.

6. Utilisation du surchauffeur selon l'une quelconque des revendications 1 à 4 dans un générateur de vapeur ou utilisation du générateur de vapeur selon la revendication 5 pour la génération de vapeur surchauffée, dans laquelle les tubes soudés longitudinalement sont exposés aux gaz de combustion.

7. Utilisation selon la revendication 6, **caractérisée en ce que** les gaz de combustion proviennent de la combustion de combustibles sélectionnés à partir du groupe composé de déchets ménagers, déchets industriels, biomasse et boue de curage.

8. Utilisation selon la revendication 6 ou 7, **caractérisée en ce que** les gaz de combustion présentent une concentration en halogène d'au moins 200 mg/Nm³, de préférence d'au moins 500 mg/Nm³.

9. Procédé de génération de vapeur surchauffée dans des générateurs de vapeur contenant un surchauffeur avec des tubes soudés longitudinalement selon la revendication 5, dans lequel les tubes soudés longitudinalement sont exposés aux gaz de combustion.

10. Procédé selon la revendication 9, **caractérisé en ce que** les gaz de combustion proviennent de la combustion de combustibles sélectionnés à partir du groupe composé de déchets ménagers, déchets industriels, biomasse et boue de curage.

11. Procédé selon la revendication 9 ou 10, **caractérisé en ce que** les gaz de combustion présentent une concentration en halogène d'au moins 200 mg/Nm³, de préférence d'au moins 500 mg/Nm³.

12. Procédé selon l'une quelconque des revendications 9 à 11, **caractérisé en ce que** les gaz de combustion présentent une teneur en humidité d'au moins 15%, de préférence d'au moins 20% et de manière encore préférée d'au moins 25 %.

13. Procédé selon l'une quelconque des revendications 9 à 12, **caractérisé en ce que** les gaz de combustion touchent à une température de 700 °C à 1 000 °C les tubes de surchauffeur ou les tubes soudés longitudinalement.

14. Utilisation selon l'une quelconque des revendications 6 à 8 ou procédé selon l'une quelconque des revendications 9 à 13, **caractérisé en ce que** la vapeur surchauffée s'écoulant dans les tubes soudés longitudinalement présente une température de 300 °C à 600 °C, de préférence de 300 C à 450 °C.

15. Utilisation selon l'une quelconque des revendications 6 à 8 ou procédé selon l'une quelconque des revendications 9 à 13, **caractérisé en ce que** la vapeur surchauffée s'écoulant par les tubes soudés longitudinalement ou tubes de surchauffeur présente une pression d'au moins 40,0 bars.
